(19) Europäisches Patentamt
European Patent Office
Office européen des brevets

(11) **EP 2 564 160 B1**

(12) **FASCICULE DE BREVET EUROPEEN**

(45) Date de publication et mention
de la délivrance du brevet:
**03.12.2014 Bulletin 2014/49**

(51) Int Cl.:
***G06F 15/00*** *(2006.01)*     ***G01C 21/20*** *(2006.01)*
***G01C 22/00*** *(2006.01)*

(21) Numéro de dépôt: **11726944.9**

(22) Date de dépôt: **13.04.2011**

(86) Numéro de dépôt international:
**PCT/IB2011/000812**

(87) Numéro de publication internationale:
**WO 2011/135417 (03.11.2011 Gazette 2011/44)**

(54) **Système de localisation tridimensionnelle d'un individu progressant à l'intérieur d'un bâtiment**

System zur dreidimensionalen Lokalisierung einer in einem Gebäude bewegenden Person

System for the three-dimensional localization of a person moving inside a building

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **30.04.2010 CH 6562010**

(43) Date de publication de la demande:
**06.03.2013 Bulletin 2013/10**

(73) Titulaire: **Hygie-Tech SA
1951 Sion (CH)**

(72) Inventeurs:
• **LE GOFF, Philippe
CH-1066 Epalinges (CH)**

• **HUGEL-LE GOFF, Catherine
CH-1066 Epalinges (CH)**
• **ANDRIEU, Raymond
1169 Yens (CH)**

(74) Mandataire: **Micheli & Cie SA
Rue de Genève 122
Case Postale 61
1226 Genève-Thônex (CH)**

(56) Documents cités:
**WO-A1-2008/035827     US-A1- 2007 260 418**

## Description

La localisation d'un individu se déplaçant dans un environnement donné, et plus particulièrement dans un environnement intérieur, reste un objectif insuffisamment satisfait malgré les progrès récents accomplis dans les modes de communication sans fils.

En effet, l'homme de l'art, dans ce cas le professionnel de l'intervention et de la sécurité, sait que les systèmes de localisation par GPS ou par GSM sont inopérants ou imprécis à l'intérieur des bâtiments, que les systèmes intégrants l'installation d'un réseau intérieur par radiofréquences ou ultrasons seront inefficaces si l'agent d'intervention n'est pas doté d'un récepteur ou si le réseau est mis hors d'usage, que les systèmes de vision sont neutralisés par les fumées opaques et que les techniques de repérage par laser ou infrarouge pourront être faussées par la modification de l'environnement intérieur par rapport à son état antérieur (effondrements de points remarquables, apparitions de sources de chaleur, autres...).

Au cours des dernières années, une somme conséquente de travaux a été publiée sans qu'aucune solution ne se dégage par son caractère universel. Toutefois, la très grande majorité des systèmes proposés partagent la caractéristique commune de se composer d'un système dual constitué par un émetteur et un récepteur ou encore par une base et un collecteur. Selon cette approche l'individu en progression dans l'environnement doit être muni d'un dispositif (partie embarquée) communiquant avec le système préalablement installé (partie fixe) dans l'espace contrôlé.

Ainsi, on trouve, selon ce principe, quantité d'inventions parmi lesquelles on citera à titre d'illustration, sans aucune volonté d'exhaustivité dans la mesure où l'approche restera disjointe de celle de la présente invention, les solutions suivantes.

Le document WO2008/35827 décrit un système de localisation pour piéton utilisant les données GIS (Géographie Information System) dans des zones où un signal GPS est difficile à acquérir et déterminant la position d'un utilisateur en calculant ses déplacements horizontaux et verticaux à l'aide des angles d'inclinaison des jambes supérieures et des jambes inférieures ou en mesurant le vecteur de distance du centre du corps au pied déterminé par les différences de temps d'arrivée des impulsions d'ondes radio et des impulsions ultrasoniques transmises par le pied lorsque le pied entre en contact avec le sol à chaque pas lors de la marche ou de la course.

L'invention décrite sous référence WO2005/103754 repose sur une technique de localisation d'un téléphone mobile par le réseau téléphonique sans fil avec une précision pouvant fortement varier selon l'environnement concerné.

L'invention décrite sous référence WO00/34803 repose sur une technique de localisation d'une entité dotée d'une camera embarquée en mouvement dans un environnement équipé de repères visuels capables d'être identifiés par la camera selon un mode d'apprentissage préalable. L'invention décrite sous référence WO2010/022797 A1 repose sur une technique de localisation en environnement intérieur d'un mobile électronique par un réseau de radiofréquences.

L'invention décrite sous référence WO2008/143613 repose sur une technique de repérage d'un mobile par un réseau de cameras préalablement installé dans l'environnement à contrôler.

L'invention décrite sous référence WO2008/036325 repose sur une technique de localisation par bornes statiques et d'un émetteur mobile, de préférence de type rayon laser. Cette invention est principalement destinée aux individus à faible acuité visuelle.

L'invention décrite sous référence WO2007/129939 repose sur une technique de localisation par un récepteur mobile communiquant avec un réseau d'émetteurs fixes selon une technologie RSSI (Radio Signal Strength Intensity).

L'invention décrite sous référence WO2009/022265 repose sur une technique de modification par un mobile en mouvement des chemins optiques émis par un réseau de sources lumineuses (visibles ou non) et de collecteurs préalablement disposés dans l'environnement à contrôler.

Pour être opérationnelles, ces solutions requièrent le bon fonctionnement des parties fixes et embarquées du système de localisation. En cas de perturbation du système communiquant ou de modification de l'environnement, l'ensemble du système pourra s'avérer alors inopérant. Or, les interventions des équipes de secours prennent le plus souvent place dans des environnements dégradés par rapport à leur état normal et la fiabilité des systèmes prédisposés peut en être altérée alors qu'une fiabilité totale est requise dans les situations d'urgence. En outre, ces systèmes présentent également le double inconvénient de nécessiter d'importants investissements pour pré équiper les installations à l'aide d'émetteurs ou de relais nécessaires à une localisation en toute zone et de doter l'ensemble des interventionnistes de récepteur compatibles avec le réseau communiquant.

Dans ce contexte, l'invention décrite dans le présent document, donne un système capable de surmonter les inconvénients relevés dans l'art antérieur en procurant une solution fiable en toutes circonstances, universelle, dans la mesure où elle ne requiert pas l'interfaçage de l'équipe interventionniste sur un système communiquant échappant à son contrôle « notion de système client », et peu onéreuse au regard des approches alternatives qui imposent d'importants frais d'installation et de maintenance.

La présente invention, désignée par Système de Localisation donne à l'homme de l'art une solution de localisation 3D en environnement possiblement dégradé. Le Système de Localisation a été conçu pour être fiable en toutes circonstances et pour être indépendant des systèmes « clients » de communication préalablement installés sur le lieu d'intervention.

L'invention va maintenant être décrite en référence aux figures annexées dans lesquelles,

La figure 1 illustre les longueurs de certains paramètres morphologiques d'un individu sur un mannequin type.
Les figures 2a, 2b, 2c illustrent les angles formés entre certains paramètre morphologiques.
La figure 3 illustre graphiquement l'amplitude d'un pas
La figure 4 illustre schématiquement les capteurs et le boîtier de commande équipant un mannequin.

Pour un individu évoluant à pied dans un environnement quelconque, le Système de Localisation donne en continu les coordonnées de positionnement de cet individu dans l'environnement par rapport à son point d'entrée. Le Système de Localisation s'appuie sur les données morphologiques de l'individu et intègre en temps réel son déplacement par l'acquisition des caractéristiques de son allure comme le résultat de la combinaison simultanée des angles, formés par les chevilles, les genoux et les hanches de l'individu en progression, mesurés par électro goniomètres et interprétés selon le mode de calcul développé par les inventeurs.

En effet, la position d'un mobile peut à tout moment être définie comme étant la résultante de la somme de déplacements unitaires associés à un point de départ. Dans le domaine des mathématiques, cette affirmation se traduit par la relation de Chasles qui donne :

$$\overrightarrow{AC} = \overrightarrow{AB} + \overrightarrow{BC}$$

Ainsi, pour une origine connue (A), la position en un point (C) instantané est donnée par la somme des déplacements unitaires (AB) et (BC). Aussi, à considérer que la position d'un point d'origine peut toujours être définie, soit dans un mode de coordonnées globales ou universelles (par exemple dans le système « latitude ; longitude ; altitude ») soit dans un mode de coordonnées relatives ou locales (système X ; Y ; Z dans un repère orthonormé propre à l'utilisateur), seuls restent alors à définir la notion de déplacement unitaire et à pouvoir déterminer les coordonnées caractérisant chacun des déplacements unitaires du mobile en déplacement.
Selon le cadre de l'invention, le mobile est constitué par un individu se déplaçant à pied dans un environnement quelconque. Dans ce cadre, la relation de Chasles s'applique particulièrement bien quand on définit que le déplacement unitaire est constitué par un pas. En effet, le pas peut s'exprimer comme étant le vecteur $\overrightarrow{MN}$ dans lequel les coordonnées du point (M) sont celles du pied amont au déplacement et les coordonnées du point (N) sont celles du pied aval. En outre, les coordonnées du point (N) donneront la position atteinte par le mobile à cet instant.
Or, à considérer que l'on connaisse le point d'origine (A), les coordonnées du point (N) seront connues si et seulement si le module et le sens de chaque vecteur traduisant un déplacement unitaire peuvent être déterminés selon la relation : $N = (\overrightarrow{AB} + \overrightarrow{BC} + ... + \overrightarrow{MN}) - A$
Pour satisfaire à l'exigence portée sur la connaissance du module et du sens du vecteur traduisant un déplacement unitaire, les inventeurs ont conçu un système basé sur la mesure et le calcul pour permettre de relier le pas effectué par l'individu en valeurs directement utilisables par l'analyse vectorielle du mouvement.

En première approche, une solution, non retenue par les inventeurs, aurait pu, pour satisfaire cette exigence, combiner l'utilisation d'un système d'instruments constitué par un podomètre, une boussole et un altimètre. Or, cette solution, si elle répond aux principes d'indépendance et d'universalité, ne donne pas la fiabilité attendue car les mesures données par une boussole peuvent être perturbées par l'environnement et l'utilisation d'un podomètre suppose une amplitude de pas constante.

Le remplacement dans la solution précédente du podomètre par un dispositif mesurant la distance parcourue par contact n'est pas non plus satisfaisant car il présente l'inconvénient de possiblement entraver la progression de l'individu et de rester conditionné par la qualité du contact. Le remplacement dans la solution précédente du podomètre par un dispositif mesurant la distance parcourue à l'aide d'un système ondulaire (laser, ultrason, radar, autre) avec l'émetteur et le récepteur placés sur l'individu en mouvement n'est pas non plus satisfaisant car il présente l'inconvénient de requérir la connaissance exacte de l'environnement et que sa configuration soit celle connue (la configuration ouverte ou fermée pour une porte modifiera le résultat de la mesure). Le remplacement dans la solution précédente du podomètre par un dispositif mesurant par effet inductif la distance entre les deux pieds de l'individu n'est pas satisfaisant dans la mesure où la technologie dans son état actuel ne permet pas d'obtenir une mesure fiable pour des écartements entre les pieds correspondant à ceux d'un pas normal (supérieur à 500 mm).
En outre, ces alternatives pour le remplacement du podomètre n'apportent pas de solution à la dépendance des autres instruments chargés de donner le sens du déplacement.

Les inventeurs ont donc conçu un système tout autre pour donner à l'utilisateur les performances de fiabilité et d'universalité attendues.

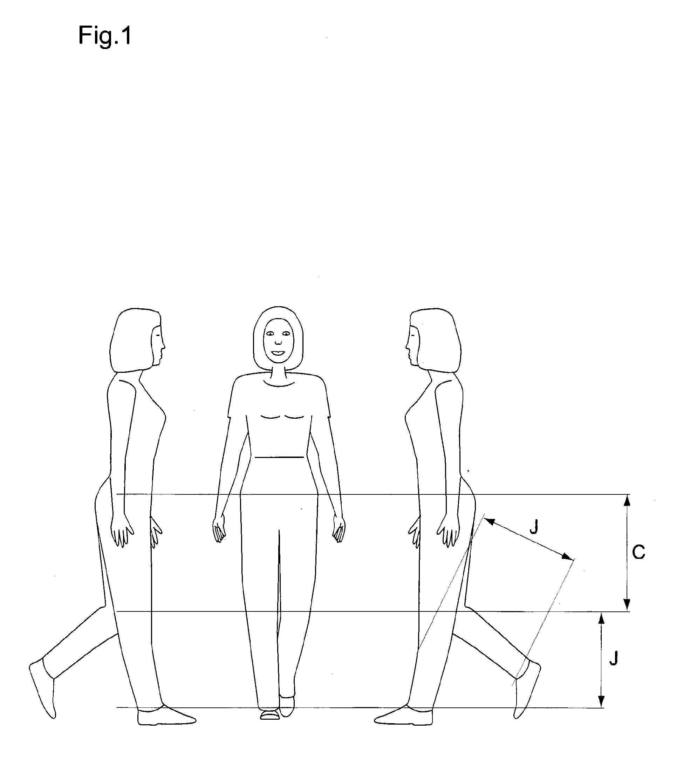

L'amplitude du pas d'un individu peut être calculée à partir des caractéristiques morphologiques des membres inférieurs de cet individu et de la configuration des articulations permettant le mouvement de ces membres.
Chez un individu normal, les longueurs des segments "C" et "J" (désignant respectivement la cuisse allant du genou jusqu'à la hanche et la jambe allant de la cheville jusqu'au genou) constituent des caractéristiques physiques personnelles constantes sur la durée d'une intervention. La figure 1 représente les longueurs considérées sur un mannequin type.

Ces grandeurs seront latéralisées pour correspondre aux caractéristiques dimensionnelles de chacun des membres inférieurs.

Ainsi, "Cg" et "Jg" seront les valeurs des longueurs mesurées sur le membre inférieur gauche tandis que "Cd" et "Jd" seront les valeurs des longueurs mesurées sur le membre inférieur droit.

Les grandeurs "H", "G" et "K" désignent les valeurs obtenues respectivement par les angles :

"H" : verticale - hanche - cuisse
"G" : cuisse - genou - jambe
"K" : dièdre (tibia - cheville - pied vs. tibia - cheville - face)
"E" : pied - horizontale

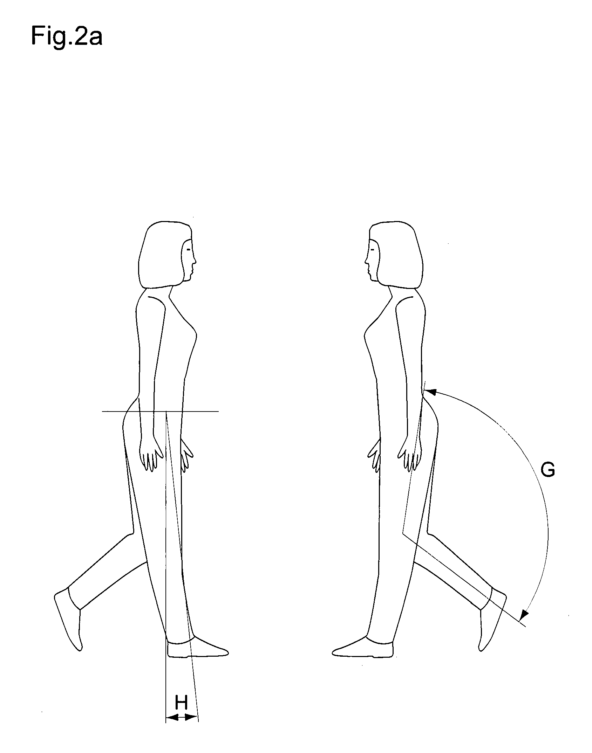

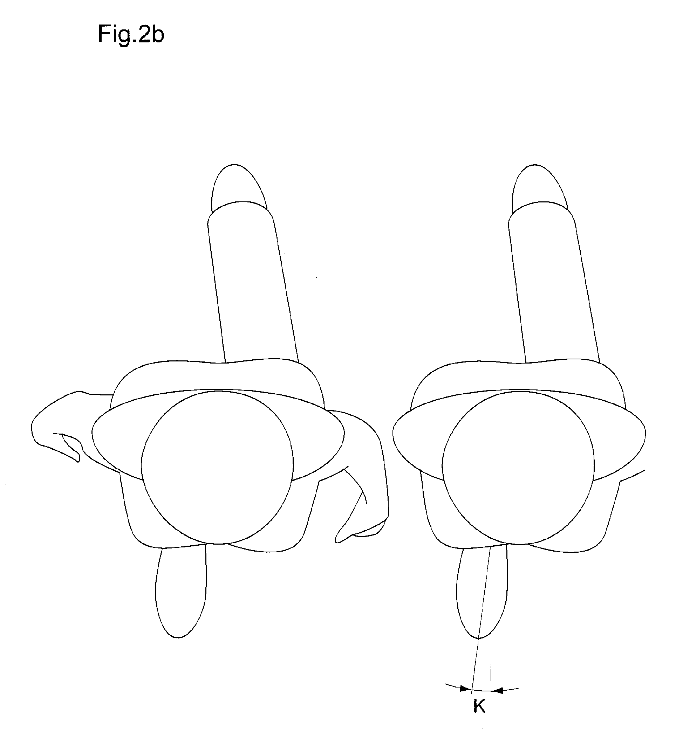

Les figures 2a et 2b représentent les angles considérés sur un mannequin type.

Ces grandeurs seront latéralisées pour correspondre au positionnement de chacun des membres inférieurs.

Ainsi, "Hg", "Gg", "Kg" et "Eg" seront les valeurs des angles mesurés sur le membre inférieur gauche tandis que "Hd", "Gd", "Kd" et "Ed" seront les valeurs des angles mesurés sur le membre inférieur droit.

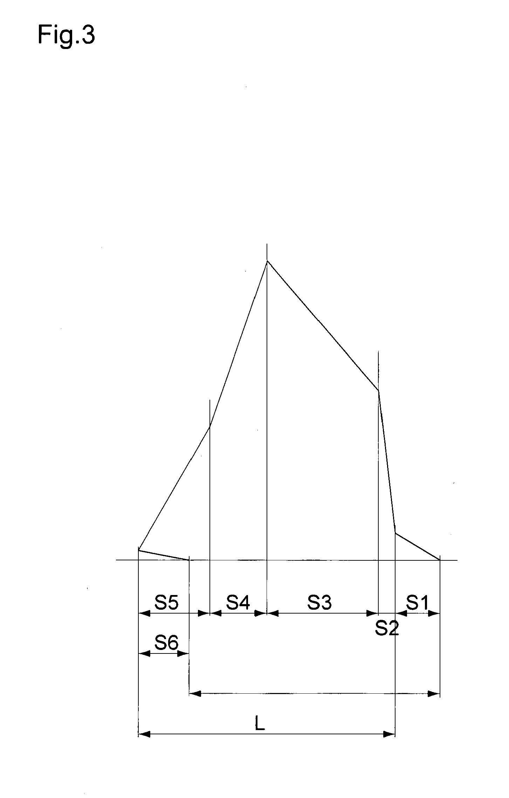

Selon cette décomposition de la morphologie et de la configuration de l'individu en mouvement, il peut être calculé que l'amplitude "L" du pas, représentée à la figure 3, est donnée par l'expression :

$$L = S2 + S3 + S4 + S5$$

Avec :

S2 = abs(Jd . cos(Fd))
S3 = abs(Cd . cos(Hd))
S4 = abs(Cg . cos(Hg))
S5 = abs(Jg . cos(Fg))

Expressions dans lesquelles abs(X) désigne la valeur absolue de la grandeur X.

Les valeurs des angles "F" se déduisent de "G" et "H" par la formule :

$$F = G - H - 90°$$

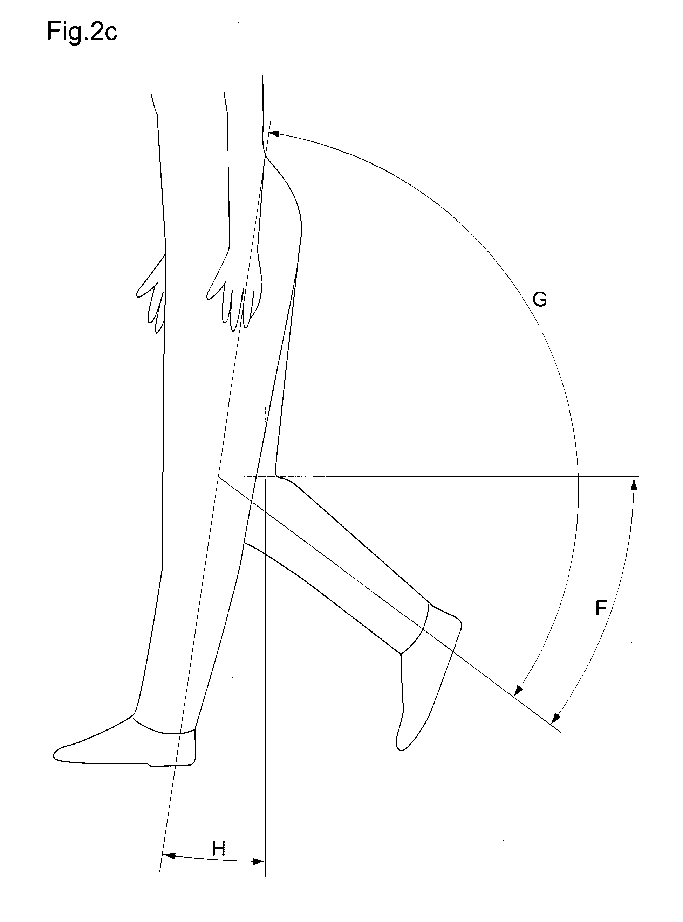

pour des valeurs d'angles exprimées en degrés
La figure 2c donne les représentations des angles "F", "G" et "H".

De ce calcul, il ressort que l'amplitude "L" du pas, correspond au module du vecteur déplacement unitaire selon l'analyse vectorielle présentée plus haut. La détermination totale du mouvement requiert encore de connaître la direction et le sens dans lesquels s'effectue le déplacement.

La direction sera déterminée par le différentiel entre les valeurs des angles Kd et Kg corrigées des valeurs de posture de l'individu (ces valeurs de correction, "Dd" et "Dg", sont spécifiques d'un individu et traduisent l'angle d'ouverture des pieds lors d'une marche en ligne droite ; cas d'une « marche en canard »).

Enfin, le sens du mouvement sera celui de la marche en avant.

Il est remarquable de constater que ce mode de calcul est aussi bien vrai dans un mode de déplacement horizontal, que dans les pentes (par les composantes des angles "Ed" et "Eg") ou encore dans les escaliers, si bien que le calcul de l'altitude atteinte est de ce fait rendu possible.

Cet ensemble de considérations clôt l'approche théorique de l'invention. Sa mise en pratique nécessite, en premier lieu, la mesure et la mémorisation pour un individu donné de ses grandeurs caractéristiques ("Cd" ; "Jd" ; "Cg" ; "Jg" et "Dd" ; "Dg").

Ensuite, la mesure en temps réel des valeurs brutes des angles caractéristiques du mouvement (c'est-à-dire "Hg" ; "Gg" ; "Kg" ; "Hd" ; "Gd" ; "Kd") nécessite un dispositif fiable, autonome, résistant, pouvant transmettre de l'information et non contraignant pour l'individu devant se déplacer.

Les inventeurs ont alors eu l'idée d'utiliser des électro goniomètres différentiels connectés à un intégrateur multivoies ; l'intégrateur étant lui même connecté à une interface programmable portable interprétant les données reçues pour calculer la position actualisée de l'individu par rapport à son point d'origine. Un dernier couple de capteurs du type accéléromètre, placés sur chacune des jambes et de préférence sur chaque pied au niveau du talon de l'individu en mouvement, permet la réinitialisation du processus d'intégration à chaque pas.

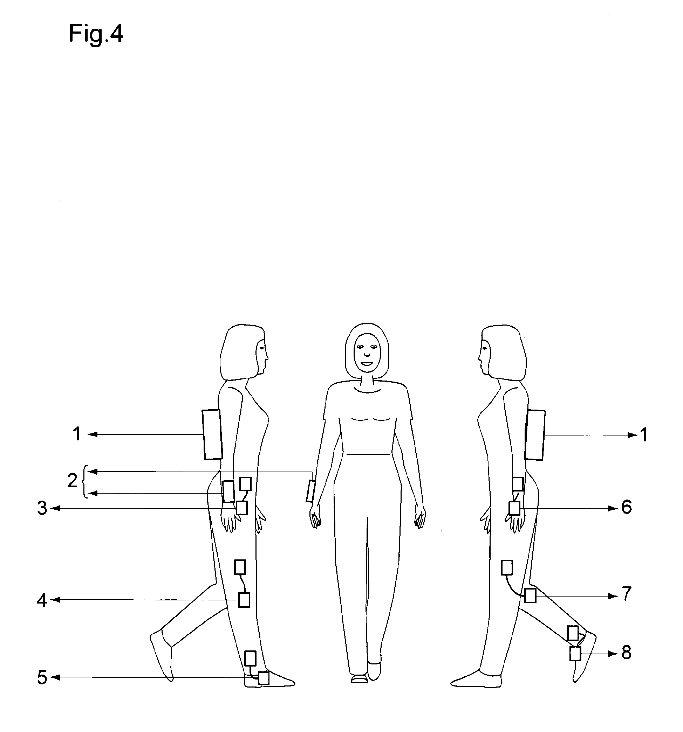

La figure 4 montre un mode d'équipement et de positionnement des capteurs et des boîtiers de commande pour un individu équipé du Système de Localisation.

Dans cette figure, 1 représente l'intégrateur multivoies pour l'acquisition et le traitement des mesures provenant des capteurs, 2 est l'interface programmable portable, 3 est le capteur différentiel de la hanche droite, "4" est le capteur différentiel du genou droit, "5" est le capteur différentiel de la cheville droite avec en outre une fonction accéléromètre, "6" est le capteur différentiel de la hanche gauche, "7" est le capteur différentiel du genou gauche, "8" est le capteur différentiel de la cheville gauche avec en outre une fonction accéléromètre.

Selon le niveau informatif disponible sur l'interface programmable portable de l'individu en mouvement, le positionnement instantané de l'individu pourra être superposé sur une cartographie 3D de l'environnement dans lequel il se trouve, et pouvant le cas échéant inclure la détermination (obtenue par modélisation CFD) du niveau de contamination de l'air dans lequel il se trouve en cas d'intervention en milieu contaminé.

**Revendications**

1. Système embarqué et autonome de localisation tridimensionnelle, par rapport à une origine connue, pour un individu marchant dans un environnement quelconque, comportant des capteurs de positions des segments des membres inférieurs (3, 4, 6, 7), des capteurs d'impact des membres inférieurs (5, 8), un intégrateur (1) des valeurs provenant de ces capteurs et une interface utilisateur (2) donnant la position de l'individu dans son environnement, l'interface utilisateur (2) permettant d'exécuter, en temps réel, le traitement des informations provenant de l'intégrateur (1), de les combiner avec des données préalablement mémorisées et d'afficher le résultat à l'individu, **caractérisé par le fait que** l'interface utilisateur (2) permet d'afficher en surimpression la position de l'individu dans une cartographie tridimensionnelle de l'environnement dans lequel il progresse avec affichage du niveau de contamination de l'air dans la zone de progression de l'utilisateur, ledit niveau de contamination de l'air étant déterminé par une modélisation utilisant la mécanique des fluides numérique ou computational fluid dynamics (CFD).

2. Système selon la revendication 1 dans lequel les capteurs de position des segments des membres inférieurs (3, 4, 6, 7) sont constitués d'électro goniomètres différentiels ou de tout autre dispositif capable de mesurer et de transmettre des valeurs d'angles.

3. Système selon l'une des revendications précédentes dans lequel les capteurs de position des segments des membres inférieurs (3, 4, 6, 7) mesurent les valeurs des angles relevés au niveau de la hanche, du genou et de la cheville pour les côtés gauche et droit de l'individu.

4. Système selon l'une des revendications précédentes dans lequel les capteurs d'impact des membres inférieurs (5, 8) sont constitués d'accéléromètres ou de tout autre dispositif capable de mesurer et de transmettre un arrêt brusque.

5. Système selon l'une des revendications précédentes dans lequel les capteurs d'impact des membres inférieurs (5, 8) sont situés sur chaque membre inférieur au plus près du pied et de préférence au niveau du talon.

6. Système selon l'une des revendications précédentes dans lequel l'intégrateur (1) des valeurs provenant des capteurs (3, 4, 5, 6, 7, 8) communique en temps réel avec lesdits capteurs (3, 4, 5, 6, 7, 8) selon un mode avec ou sans fil de connexion pour chaque capteur.

7. Système selon l'une des revendications précédentes dans lequel l'intégrateur (1) est de type multivoies avec un nombre de voies au minimum égal au nombre de capteurs.

8. Système selon l'une des revendications précédentes dans lequel l'intégrateur (1) est autonome en alimentation et est porté par l'individu.

9. Système selon l'une des revendications précédentes dans lequel les voleurs dans l'intégrateur (1) sont transférées à l'interface utilisateur (2) puis réinitialisées à chaque impulsion provenant d'un capteur d'impact (5, 8).

10. Système selon l'une des revendications précédentes dans lequel l'interface utilisateur (2) communique par réception de paquets de données avec l'intégrateur (1) selon un mode avec ou sans fil de connexion.

11. Système selon l'une des revendications précédentes dans lequel l'interface utilisateur (2) est autonome en alimentation et est porté par l'individu de manière aisément visible.

12. Système selon l'une des revendications précédentes dans lequel le calcul exécuté par l'interface utilisateur (2) ne repose que sur les données transmises par l'intégrateur (1), sur les caractéristiques morphologiques de l'individu et sur la détermination du point d'origine.

13. Système selon la revendication 12 dans lequel les caractéristiques morphologiques de l'individu sont constituées des longueurs des segments "cuisses" (de la hanche au genou) (C, Cd, Cg) et "jambes" (du genou à la cheville) (J, Jd, Jg) pour les membres du côté gauche et du côté droit ; des valeurs des angles traduisant la position des membres inférieurs de l'individu (H, G, K, E, Hg, Hd, Gd, Gg, Kd, Kg, Ed, Eg) lors d'une marche en ligne droite.

14. Système selon l'une des revendications 12 ou 13 dans lequel le calcul de l'amplitude du pas de l'individu s'exprime par L = S2 + S3 + S4 + S5 avec :

   S2 = abs(Jd . cos(Fd))
   S3 = abs(Cd . cos(Hd))
   S4 = abs(Cg . cos(Hg))
   S5 = abs(Jg . cos(Fg))
   Fg = Gg - Hg - 90° pour des valeurs d'angles exprimées en degrés
   Fd = Gd - Hd - 90° pour des valeurs d'angles exprimées en degrés

Hg: angle axe vertical - hanche - cuisse pour le membre gauche

Hd: angle axe vertical - hanche - cuisse pour le membre droit

Gg: angle cuisse - genou - jambe pour le membre gauche

Gd: angle cuisse - genou - jambe pour le membre droit

Jg: longueur du segment cheville - genou pour le membre gauche

Jd: longueur du segment cheville - genou pour le membre droit

Cg: longueur du segment genou - hanche pour le membre gauche

Cd: longueur du segment genou - hanche pour le membre droit

15. Système selon l'une des revendications 12 à 14 dans lequel la direction du pas pour un mode de marche en avant est déterminée par les valeurs des angles Kd et Kg corrigées des valeurs de posture Dd et Dg de l'individu avec :

Kd = dièdre (tibia-cheville-pied vs tibia-cheville-face) pour le membre droit ;

Kg = dièdre (tibia-cheville-pied vs tibia-cheville-face) pour le membre gauche;

Dd est une valeur de posture spécifique à l'individu traduisant l'angle d'ouverture du pied droit de l'individu lors d'une marche en ligne droite : et

Dg est une valeur de posture spécifique à l'individu traduisant l'angle d'ouverture du pied gauche de l'individu lors d'une marche en ligne droite.

16. Système selon la revendication 15 dans lequel la position instantanée de l'individu est calculée par rapport au point d'origine comme étant la somme des vecteurs unitaires de déplacement ayant pour chacun d'eux un module correspondant à la valeur L exprimée selon la revendication 14 et la direction du pas exprimée selon la revendication 15.

**Patentansprüche**

1. Mitgeführtes und unabhängiges System zur dreidimensionalen Lokalisierung für eine Person, die sich in irgendeiner Umgebung zu Fuß bewegt, in Bezug zu einem bekannten Ursprung, das Sensoren für die Positionen der Abschnitte der unteren Extremitäten (3, 4, 6, 7), Auftreffsensoren der unteren Extremitäten (5, 8), einen Integrator (1) der Werte, die von diesen Sensoren stammen, und eine Benutzerschnittstelle (2) umfasst, die die Position der Person in ihrer Umgebung angibt, wobei die Benutzerschnittstelle (2) es ermöglicht, die Verarbeitung der Informationen, die von dem Integrator (1) stammen, in Echtzeit auszuführen, sie mit zuvor gespeicherten Daten zu kombinieren und das Ergebnis für die Person anzuzeigen, **dadurch gekennzeichnet, dass** die Benutzerschnittstelle (2) das Anzeigen der Position der Person als Einblendung in einer dreidimensionalen Kartographie der Umgebung, in der sie sich bewegt, mit Anzeige des Grades der Luftverunreinigung in der Zone, in der der Benutzer sich bewegt, ermöglicht, wobei der Grad der Luftverunreinigung durch eine Modellierung unter Verwendung der digitalen Fluidmechanik oder Computational Fluid Dynamics (CFD) bestimmt wird.

2. System nach Anspruch 1, wobei die Sensoren für die Position der Abschnitte der unteren Extremitäten (3, 4, 6, 7) aus Differential-Elektrogoniometern oder irgendeiner anderen Vorrichtung gebildet sind, die in der Lage ist, Winkelwerte zu messen und zu übermitteln.

3. System nach einem der vorhergehenden Ansprüche, wobei die Sensoren für die Position der Abschnitte der unteren Extremitäten (3, 4, 6, 7) Winkelwerte messen, die im Bereich der Hüfte, des Knies und des Knöchels für die linke und rechte Seite der Person aufgenommen werden.

4. System nach einem der vorhergehenden Ansprüche, wobei die Auftreffsensoren der unteren Extremitäten (5, 8) aus Beschleunigungsmessern oder irgendeiner anderen Vorrichtung gebildet sind, die in der Lage ist, ein abruptes Anhalten zu messen und zu übermitteln.

5. System nach einem der vorhergehenden Ansprüche, wobei die Auftreffsensoren der unteren Extremitäten (5, 8) sich auf jeder unteren Extremität so nah wie möglich am Fuß und vorzugsweise im Bereich der Ferse befinden.

6. System nach einem der vorhergehenden Ansprüche, wobei der Integrator (1) der Werte, die von den Sensoren (3, 4, 5, 6, 7, 8) stammen, in Echtzeit mit den Sensoren (3, 4, 5, 6, 7, 8) auf eine drahtgebundene oder drahtlose Verbindungsart für jeden Sensor kommuniziert.

7. System nach einem der vorhergehenden Ansprüche, wobei der Integrator (1) vom Mehrkanaltyp mit einer Anzahl von Kanälen ist, die mindestens gleich der Anzahl der Sensoren ist.

8. System nach einem der vorhergehenden Ansprüche, wobei der Integrator (1) versorgungsunabhängig ist und von der Person getragen wird.

**9.** System nach einem der vorhergehenden Ansprüche, wobei die Werte in dem Integrator (1) an die Benutzerschnittstelle (2) übertragen werden und dann bei jedem Impuls von einem Auftreffsensor (5, 8) reinitialisiert werden.

**10.** System nach einem der vorhergehenden Ansprüche, wobei die Benutzerschnittstelle (2) über den Empfang von Datenpaketen mit dem Integrator (1) auf eine drahtgebundene oder drahtlose Verbindungsart kommuniziert.

**11.** System nach einem der vorhergehenden Ansprüche, wobei die Benutzerschnittstelle (2) versorgungsunabhängig ist und durch die Person leicht sichtbar getragen wird.

**12.** System nach einem der vorhergehenden Ansprüche, wobei die Berechnung, die durch die Benutzerschnittstelle (2) ausgeführt wird, lediglich auf Daten, die durch den Integrator (1) gesendet werden, auf morphologischen Eigenschaften der Person und auf der Bestimmung des Ursprungspunkts beruht.

**13.** System nach Anspruch 12, wobei die morphologischen Eigenschaften der Person aus den Längen der Segmente "Oberschenkel" (von der Hüfte bis zum Knie) (C, Cd, Cg) und "Beine" (vom Knie bis zum Knöchel) (J, Jd, Jg) für die Extremitäten auf der linken Seite und auf der rechten Seite gebildet sind; wobei Winkelwerte die Position der unteren Extremitäten der Person (H, G, K, E, Hg, Hd, Gd, Gg, Kd, Kg, Ed, Eg) bei einer geradlinigen Fortbewegung ausdrücken.

**14.** System nach einem der Ansprüche 12 oder 13, wobei die Berechnung der Weite des Schritts der Person durch L = S2 + S3 + S4 + S5 ausgedrückt ist, wobei:

S2 = abs(Jd.cos(Fd))
S3 = abs(Cd.cos(Hd))
S4 = abs(Cg.cos(Hg))
S5 = abs(Jg.cos(Fg))
Fg = Gg - Hg - 90° für in Grad ausgedrückte Winkelwerte
Fd = Gd - Hd - 90° für in Grad ausgedrückte Winkelwerte
Hg: Winkel Vertikalachse - Hüfte - Oberschenkel für die linke Extremität
Hd: Winkel Vertikalachse - Hüfte - Oberschenkel für die rechte Extremität
Gg: Winkel Oberschenkel - Knie - Bein für die linke Extremität
Gd: Winkel Oberschenkel - Knie - Bein für die rechte Extremität
Jg: Länge des Abschnitts Knöchel - Knie für die linke Extremität

Jd: Länge des Abschnitts Knöchel - Knie für die rechte Extremität
Cg: Länge des Abschnitts Knie - Hüfte für die linke Extremität
Cd: Länge des Abschnitts Knie - Hüfte für die rechte Extremität.

**15.** System nach einem der Ansprüche 12 bis 14, wobei die Schrittrichtung für eine Art der Fortbewegung zu Fuß nach vorne durch die Werte der Winkel Kd und Kg bestimmt wird, die um die Körperhaltungswerte Dd und Dg der Person korrigiert werden, wobei:

Kd = Flächenwinkel (Schienbein-Knöchel-Fuß gegen Schienbein-Knöchel-Vorderseite) für die rechte Extremität;
Kg = Flächenwinkel (Schienbein-Knöchel-Fuß gegen Schienbein-Knöchel-Vorderseite) für die linke Extremität;
Dd ein für die Person spezifischer Körperhaltungswert ist, der den Öffnungswinkel des rechten Fußes der Person bei einer geradlinigen Fortbewegung zu Fuß ausdrückt; und
Dg ein für die Person spezifischer Körperhaltungswert ist, der den Öffnungswinkel des linken Fußes der Person bei einer geradlinigen Fortbewegung zu Fuß ausdrückt.

**16.** System nach Anspruch 15, wobei die momentane Position der Person in Bezug zu einem Ursprungspunkt als die Summe der Einheitsvektoren der Bewegung berechnet wird, die jeweils eine Vektorgröße aufweisen, die dem nach Anspruch 14 ausgedrückten Wert L und der nach Anspruch 15 ausgedrückten Schrittrichtung entspricht.

**Claims**

**1.** System that is carried and independent for three-dimensional locating, in relation to a known origin, for an individual walking in any environment, comprising position sensors of the segments of the lower limbs (3, 4, 6, 7), sensors for impact of the lower limbs (5, 8), an integrator (1) of the values coming from these sensors, and a user interface (2) giving the position of the individual in his environment, the user interface (2) making it possible, in real time, to carry out the processing of the information coming from the integrator (1), to combine it with previously stored data, and to display the results to the individual, **characterized in that** the user interface (2) makes it possible to display superimposed the position of the individual in a three-dimensional mapping of the environment in which he moves about with display of the level of contamination of the air in the moving-around zone of the user, the said level of contamination of the air being determined by a modeling using computational fluid dynamics (CFD).

2. System according to claim 1, in which the position sensors of the segments of the lower limbs (3, 4, 6, 7) consist of differential electrogoniometers or of any other device capable of measuring and transmitting values of angles.

3. System according to any of the preceding claims, in which the position sensors of the segments of the lower limbs (3, 4, 6, 7) measure the values of the angles picked up at the level of the hip, the knee and the ankle for the left and right sides of the individual.

4. System according to any of the preceding claims, in which the impact sensors of the lower limbs (5, 8) consist of accelerometers or of any other device capable of measuring and transmitting a quick stop.

5. System according to any of the preceding claims, in which the impact sensors of the lower limbs (5, 8) are located on each lower limb as close as possible to the foot and preferably at the level of the heel.

6. System according to any of the preceding claims, in which the integrator (1) of the values coming from the sensors (3, 4, 5, 6, 7, 8) communicates in real time with said sensors (3, 4, 5, 6, 7, 8) in a wired or wireless mode.

7. System according to any of the preceding claims, in which the integrator (1) is of the multichannel type with a number of channels at a minimum equal to the number of sensors.

8. System according to any of the preceding claims, in which the integrator (1) is independently powered and is carried by the individual.

9. System according to any of the preceding claims, in which the values in the integrator (1) are transferred to the user interface (2) and then reinitialized at each pulse coming from an impact sensor (5, 8).

10. System according to any of the preceding claims, in which the user interface (2) communicates by receiving packets of data with the integrator (1) in a wired or wireless mode.

11. System according to any of the preceding claims, in which the user interface (2) is independently powered and is carried by the individual in an easily visible way.

12. System according to any of the preceding claims, in which the calculation carried out by the user interface (2) is based only on the data transmitted by the integrator (1), on the morphological characteristics of the individual, and on the determination of the point of origin.

13. System according to claim 12, in which the morphological characteristics of the individual consist of the lengths of the "thigh" segments (from the hip to the knee) (C, Cd, Cg) and "leg" segments (from the knee to the ankle) (J, Jd, Jg) for the limbs on the left side and on the right side; values of the angles reflecting the position of the lower limbs of the individual (H, G, K, E, Hg, Hd, Gd, Gg, Kd, Kg, Ed, Eg) during walking in a straight line.

14. System according to any of claims 12 or 13, in which the calculation of the amplitude of the step of the individual is expressed by $L = S2 + S3 + S4 + S5$ with:

 $S2 = abs(Jd \cdot cos(Fd))$
 $S3 = abs(Cd \cdot cos(Hd))$
 $S4 = abs(Cg \cdot cos(Hg))$
 $S5 = abs(Jg \cdot cos(Fg))$
 $Fg = Gg - Hg - 90°$ for values of angles expressed in degrees
 $Fd = Gd - Hd - 90°$ for values of angles expressed in degrees
 Hg: angle vertical axis - hip - thigh for the left limb
 Hd: angle vertical axis - hip - thigh for the right limb
 Gg: angle thigh - knee - leg for the left limb
 Gd: angle thigh - knee - leg for the right limb
 Jg: length of the segment ankle - knee for the left limb
 Jd: length of the segment ankle - knee for the right limb
 Cg: length of the segment knee - hip for the left limb
 Cd: length of the segment knee - hip for the right limb

15. System according to any of claims 12 to 14, in which the calculation of the direction of the step for a forward walking mode is expressed by the values of the angles Kd and Kg corrected with the values of posture "Dd" and "Dg" of the individual with:

 Kd = dihedral (tibia - ankle - foot vs. tibia - ankle - frontal) for the right limb;
 Kg = dihedral (tibia - ankle - foot vs. tibia - ankle - frontal) for the left limb;
 Dd is a value of posture specific to the individual and reflecting the angle of opening of the right foot of the individual during walking in a straight line; and
 Dg is a value of posture specific to the individual and reflecting the angle of opening of the left foot of the individual during walking in a straight line.

**16.** System according to claim 15, in which the instantaneous position of the individual is calculated in relation to the point of origin as being the sum of the unitary vectors of movement that have for each of them a modulus corresponding to the value L expressed according to claim 14 and the direction of the step expressed according to claim 15.

Fig.1

# Fig.2a

Fig.2b

## Fig.2c

Fig.3

# Fig.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 200835827 A
- WO 2005103754 A
- WO 0034803 A
- WO 2010022797 A1

- WO 2008143613 A
- WO 2008036325 A
- WO 2007129939 A
- WO 2009022265 A